# EUROPEAN PATENT SPECIFICATION

(11) **EP 2 270 358 B1**
(45) Date of publication and mention of the grant of the patent: **01.08.2012**
(21) Application number: 09738971.2
(22) Date of filing: 29.04.2009
(51) Int. Cl.: F16H 1/28, F16H 3/54, F16H 3/00, B62M 6/65

(54) **ONE-WAY TRANSMISSION FOR MOTOR**
EINWEGGETRIEBE FÜR EINEN MOTOR
TRANSMISSION UNILATÉRALE POUR MOTEUR

(30) Priority: 02.05.2008 KR 20080041278
(43) Date of publication of application: 05.01.2011
(73) Proprietor: MBI Co., Ltd., Chungcheongbuk-do 361-270 (KR)
(72) Inventor: AN, Seong-Cheol, Cheongju-si Chungcheongbuk-do 361-270 (KR)
(74) Representative: Wilson Gunn
(86) International application number: PCT/KR2009/002236
(87) International publication number: WO 2009/134065

(56) References cited:
- DE-U1- 20 020 613
- DE-U1- 20 308 315
- GB-A- 2 297 364
- JP-A- 2002 293 285
- KR-A- 20050 009 566
- US-B1- 6 383 107
- US-B1- 6 383 108

## Description

### BACKGROUND OF THE INVENTION

### 1. Field of the Invention

The present invention relates to a one way transmission for a motor, and more particularly, to a one way transmission for a motor, which can always output one way rotation with speed changed regardless of whether a motor rotates normally or reversely, according to the preamble of claim 1 and as it is disclosed in DE 200206130.

### 2. Description of the Related Art

In general, a transmission is a device that decreases or increases speed of output rotation.

Such a transmission is coupled to a driving shaft to change speed automatically or manually. In a manual transmission, there is provided a clutch between the driving shaft and the transmission, whereby the transmission changes speed in a state where driving rotation to the transmission is intercepted. In addition, an automatic transmission, which is not provided with a decoupling means such as a clutch, automatically changes speed according to a pressure change of an output side and so on.

However, since the conventional manual transmission must have the clutch, it is not comfortable to be used and makes the transmission large. Further, since the conventional automatic transmission is complicated, it becomes too large and often suffers from failure.

### SUMMARY OF THE INVENTION

The present invention is conceived to solve the aforementioned problems in the prior art. An object of the present invention is to provide a one way transmission for a motor, which has a structure for changing speed in the same direction as a motor normally rotate even when the motor rotates reversely.

According to an aspect of the present invention for achieving the above object, there is provided a one way transmission for a motor according to the present invention comprises the features of claim 1.

### BRIEF DESCRIPTION OF THE DRAWINGS

FIG. 1 is a sectional view illustrating a one way transmission for a motor according to the present invention;
FIGS. 2 and 3 are cross sectional views showing the operation of the one way transmission for a motor of FIG. 1; and
FIG. 4 is a view illustrating an example of a one way clutch with a reverse input allowing function.

### DESCRIPTION OF THE PREFERRED EMBODIMENT

Hereinafter, a one way transmission for a motor according to a preferred embodiment of the present invention will be described in detail with reference to the accompanying drawings.

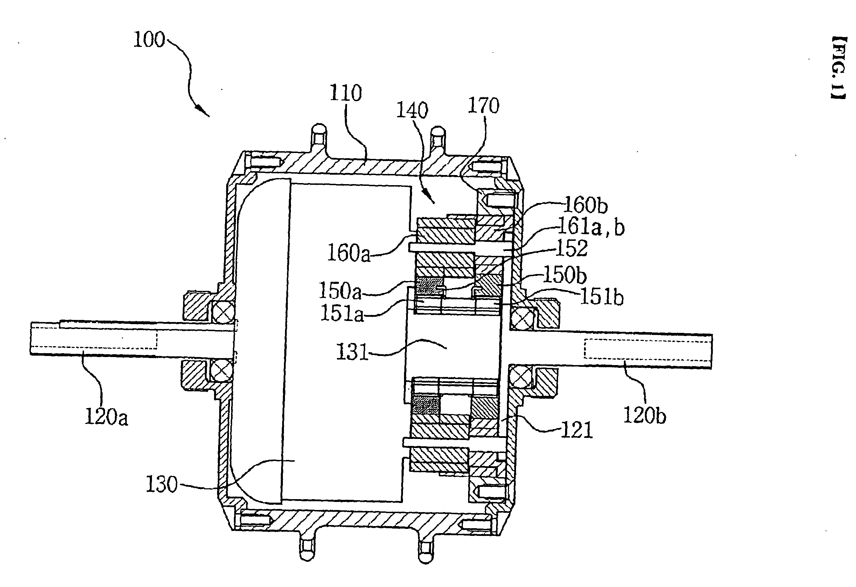

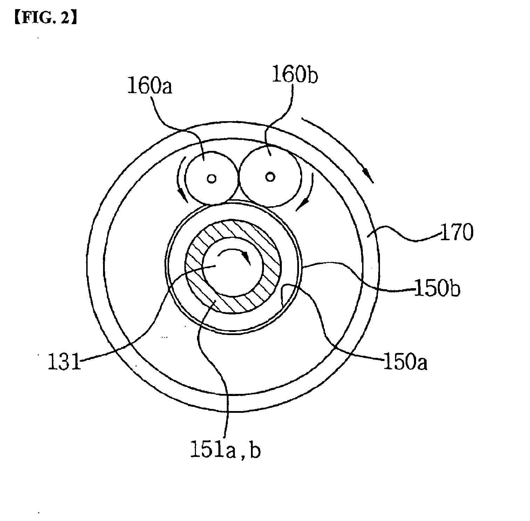

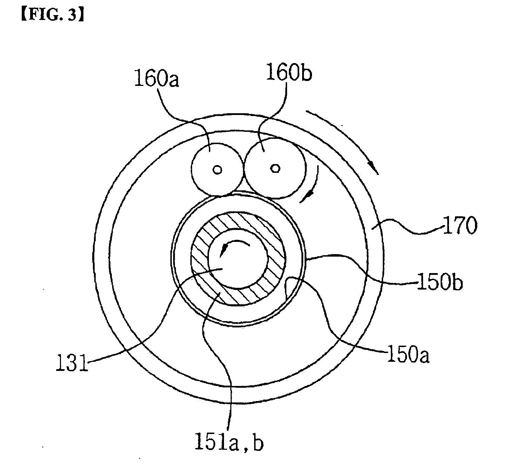

FIG. 1 is a sectional view illustrating a one way transmission for a motor according to the present invention, and FIGS. 2 and 3 are cross sectional views showing the operation of the one way transmission for a motor of FIG. 1, wherein FIG. 2 shows an operating state when a motor rotates normally (clockwise) and FIG. 3 shows an operating state when a motor rotates reversely (counterclockwise).

Referring to FIGS. 1 and 2, a one way transmission 100 for a motor according to the present invention includes a hub shell 110, fixing shafts 120a and 120b extending from both sides of the hub shell 110, a built-in motor 130 mounted in the hub shell 110, and a changing speed means 140 for changing a driving rotation of the built-in motor 130 and outputting a driven rotation to the hub shell 110 in a one way.

The hub shell 110 functions as a cover and an outputting portion of the transmission 100. A power transmitting means such as a sprocket or pulley is integrally formed on an outer peripheral surface of the hub shell 110 so as to transmit the driven rotation to the outside. In addition, the hub shell 110 rotates around the two fixing shafts 120a and 120b extending from both the sides thereof.

The built-in motor 130 having a driving shaft 131 is supported by the fixing shafts and mounted in the hub shell 110 so formed. The changing speed means 140 is installed between the driving shaft 131 and an inner surface of the hub shell 110. Preferably, the built-in motor 130 is supported by the one fixing shaft 120a, and the changing speed means 140 is supported between the built-in motor 130 and an extension plate 121 radially enlarged at an end portion of the other fixing shaft 120b.

The changing speed means 140 includes first and second sun gears 150a and 150b coupled to an outer peripheral surface of the driving shaft 131 to be spaced apart from each other, first and second planetary gears 160a and 160b engaged with the two sun gears 150a and 150b, respectively, and a ring gear 170 integrally formed on an inner peripheral surface of the hub shell 110 and engaged with the second planetary gear 160b.

Here, one way clutches 151a and 151b having opposite directions are mounted between the sun gears 150a and 150b and the driving shaft 131, respectively. That is, the first one way clutch 151a that constrains the first sun gear 150a when the driving shaft 131 rotates in a normal direction is coupled between the first sun gear 150a and the driving shaft 131, and the second one way clutch 151b that constrains the second sun gear 150b when the driving shaft 131 rotates in a reverse direction is coupled between the second sun gear 150b and the driving shaft 131.

In addition, friction pins 152 are mounted to the one way clutches 151a and 151 b, respectively. That is, the friction pins 152 are to prevent the one way clutches 151a and 151b from rotating together with the driving shaft 131 when the one way clutches 151a and 151b are not constrained to the driving shaft 131. More specifically, the friction pin 152 has a bent shape such that an upper end of the friction pin 152 is fixed to the sun gear 150a or 150b and a lower end of the friction pin 152 is in close contact with the one way clutch 151a or 151b.

Meanwhile, the first planetary gear 160a and the second planetary gear 160b are supported with their gear shafts 161a and 161b fixed to the built-in motor 130 and the extension plate 121. Moreover, the first planetary gear 160a and the second planetary gear 160b are engaged with each other.

Hereinafter, the operation of the one way transmission 100 for a motor so configured will be explained briefly.

First of all, when the built-in motor 130 rotates normally (clockwise), as shown in FIG. 2, the driving shaft 131 rotates normally. The normal rotation of the driving shaft 131 causes the first one way clutch 151a to constrain the first sun gear 150a to rotate normally. The first sun gear 150a makes the first planetary gear 160a rotate in a reverse direction. The first planetary gear 160a makes the second planetary gear 160b rotate in the normal direction. The second planetary gear 160b is engaged with the ring gear 170, so that the hub shell 110 rotates in the normal direction with speed changed.

Here, it is possible to decrease or increase the output rotational speed to the hub shell 110 by controlling the rotation number of the second planetary gear 160b by changing a size of the first planetary gear 160a.

Next, when the built-in motor 130 rotates reversely (counterclockwise), as shown in FIG. 3, the driving shaft 131 rotates reversely. The reverse rotation of the driving shaft 131 causes the second one way clutch 151b to constrain the second sun gear 150b to rotate reversely. The second sun gear 150b makes the second planetary gear 160b rotate in a normal direction. The second planetary gear 160b is engaged with the ring gear 170, so that the hub shell 110 rotates in the normal direction with speed decreased.

In the meantime, it is necessary to consider a case where power is not normally input from the built-in motor 130 but reversely input from the hub shell 110. In such a case, a one way clutch with a reverse input allowing function may be used.

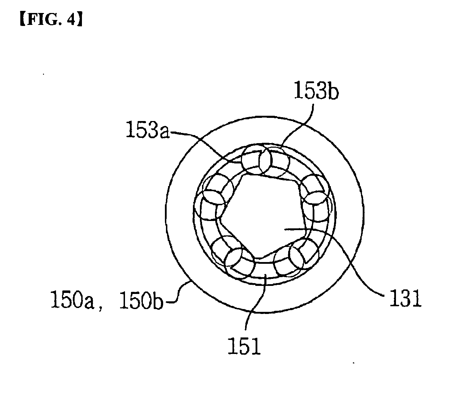

FIG. 4 is a view illustrating an example of a one way clutch with a reverse input allowing function.

Referring to FIG. 4, a portion of a driving shaft 131 which is in contact with the sun gears is formed to have a cross section of a polygonal shape, a one way clutch 151 with a reverse input allowing function is mounted to the outside of the polygonal portion of the driving shaft 131, and two sun gears 150a and 150b are coupled to the outside of the one way clutch 151.

Here, first and second balls 153a and 153b spaced apart from each other are embedded in the one way clutch 151 to be in close contact with the polygonal surfaces of the driving shaft 131, so that any ones of the two balls 153a and 153b are constrained according to a rotating direction of the driving shaft 131. That is, the first balls 153a are arranged between the driving shaft 131 and the first sun gear 150a, and the second balls 153b are arranged between the driving shaft 131 and the second sun gear 150b. Accordingly, even if rotational force is reversely input from the hub shell 110, the one way clutch 151 cancels the rotational force, so that the rotational force is not reversely input to the driving shaft 131 and the built-in motor 130.

As described above, a one way transmission for a motor according to the present invention can be implemented such that driving rotation can be output in a one way regardless of a rotating direction of a built-in motor and output speed can be changed when an input direction is changed. A changing speed unit can be embedded together with a motor in a single body to constitute a small-sized changing speed motor, so that such a changing speed motor can be useful for a bicycle or motorcycle which is affected when the motor protrudes to the outside.

Although the present invention has been described with reference to the preferred embodiments, it will be understood by those skilled in the art that various modifications and changes can be made thereto without departing from the spirit and scope of the invention defined by the appended claims.

## Claims

1. An one way transmission for a motor, comprising:
a hub shell (110) rotatably coupled to two fixing shafts (120a, 120b) extending from both sides thereof;
a built-in motor (130) arranged in the hub shell (110) and provided with a driving shaft (131); and
a changing speed means (140) mounted between the driving shaft (131) and the hub shell (110) to output driving rotation of the built-in motor (130) to the hub shell (110) in a one way with speed changed,
wherein the changing speed means (140) comprises first and second sun gears (150a, 150b)
coupled to an outer peripheral surface of the driving shaft (131), each of said first and second sun gears constrained by first and second one way clutches respectively, **characterized in that** said first one way
clutch constraining said first sun gear in a first direction and said second one way clutch constraining said second sun gear in a second direction which is opposite the first direction,
and wherein a first planetary gear (160a)is engaged with the first sun gear (150a), and a second planetary gear (160b) is engaged with the second sun gear (150b), the first planetary gear (160a) and the hub shell (110).

## Patentansprüche

1. Einweggetriebe für einen Motor, umfassend:
einen Nabenkörper (110), der drehbar mit zwei Aufnahmewellen (120a, 120b) gekoppelt ist, die von dessen beiden Seiten ausgehen,
einen eingebauten Motor (130), der in dem Nabenkörper (110) angeordnet ist und mit einer Antriebswelle (131) ausgestattet ist, und
Geschwindigkeitsänderungsmittel (140), die zwischen der Antriebswelle (131) und dem Nabenkörper (110) montiert sind, um die Antriebsdrehung des eingebauten Motors (130) zu dem Nabenkörper (110) in einen Einweg mit veränderlicher Geschwindigkeit auszugeben,
wobei die Geschwindigkeitsänderungsmittel (140) ein erstes und ein zweites Sonnenrad (150a, 150b) umfassen, die an eine äußere periphere Oberfläche der Antriebswelle (131) angekoppelt sind, wobei das erste und das zweite Sonnenrad jeweils von einer ersten und einer zweiten Einwegkupplung fixiert werden, **dadurch gekennzeichnet, dass** die erste Einwegkupplung das erste Sonnenrad in einer ersten Richtung fixiert und die zweite Einwegkupplung das zweite Sonnenrad in einer zweiten Richtung fixiert, die der ersten Richtung entgegengesetzt ist, und wobei ein erstes Planetenrad (160a) im Eingriff mit dem ersten Sonnenrad (150a) steht und ein zweites Planetenrad (160b) im Eingriff mit dem zweiten Sonnenrad (150b), dem ersten Planetenrad (160a) und dem Nabenkörper (110) steht.

## Revendications

1. Transmission unilatérale pour un moteur comprenant :
un carter de moyeu (110) couplé de manière rotative à deux arbres de fixation (120a, 120b) s'étendant à partir de ses deux côtés ;
un moteur intégré (130) agencé dans le carter de moyeu (110) et prévu avec un arbre d'entraînement (131) ; et
un moyen de changement de vitesse (140) monté entre l'arbre d'entraînement (131) et le carter de moyeu (110) pour transmettre la rotation d'entraînement du moteur intégré (130) au carter de moyeu (110) de manière unilatérale avec le changement de vitesse,
dans laquelle le moyen de changement de vitesse (140) comprend des premier et second planétaires (150a, 150b) couplés à une surface périphérique externe de l'arbre d'entraînement (131), chacun desdits premier et second planétaires étant contraint par lesdits premier et second embrayages unilatéraux respectivement, **caractérisée en ce que** ledit premier embrayage unilatéral contraint ledit premier planétaire dans une première direction et ledit second embrayage unilatéral contraint ledit second planétaire dans une seconde direction qui est opposée à la première direction, et dans laquelle un premier engrenage planétaire (160a) est mis en prise avec le premier planétaire (150a) et un second engrenage planétaire (160b) est mis en prise avec le second planétaire (150b), le premier engrenage planétaire (160a) et le carter de moyeu (110).
